# EUROPEAN PATENT APPLICATION

(11) **EP 4 578 685 A1**
(43) Date of publication of application: **02.07.2025**
(21) Application number: 24223325.2
(22) Date of filing: 26.12.2024
(51) Int. Cl.: B60K 6/44, B60W 10/06, B60W 10/08, B60W 20/12, B60W 20/16, B60W 20/40, B60W 50/08, B60K 6/48, B60W 50/00, B60W 50/14

(54) **HYBRID VEHICLE**

(30) Priority: 29.12.2023 JP 2023223759
(71) Applicant: TOYOTA JIDOSHA KABUSHIKI KAISHA, Aichi-ken, 471-8571 (JP)
(72) Inventor: YAMADA, Yuki, TOYOTA-SHI, AICHI-KEN, 471-8571 (JP)
(74) Representative: Cabinet Beau de Loménie

(57) **Abstract**

A controller (50) of a hybrid vehicle (20) performs an area driving support control that switches to a motor driving mode and performs motor driving when driving in a motor driving area that has been set in advance as an area where the motor (MG) should drive. The controller (50) is programmed to stop the area driving support control and to drive in a normal driving mode when a driving mode selection switch (36) is operated while driving in the motor driving area by the area driving support control.

## Description

### Technical Field

The present disclosure relates to a hybrid vehicle.

### Background

Conventional hybrid vehicles of this type have been proposed that switch between an electric vehicle mode in which the electric motor runs alone, an engine mode in which the engine runs alone, and a combined mode in which both run together according to the mode-switching vehicle speed (see, for example, Patent Document 1). This hybrid vehicle can be driven in an environmentally compatible manner by switching the mode-switching vehicle speed for each environment, such as urban, suburban, highway, tunnel, and so on.

### [Citation List]

### [Patent Document]

[Patent Document 1] Japanese Patent Application Laid Open No. H06-187595

### Summary

In such hybrid vehicles, the motor driving area, in which the vehicle should run using only the power from the motor with the engine stopped, is predetermined in the map information, and in some cases, when driving in the motor driving area, the driving mode is switched to the motor driving mode and the area driving support control is executed to control the vehicle to run using the motor. In addition, some of these hybrid vehicles are equipped with a mode selection switch that can be operated by the driver. When the mode selection switch is operated by the driver while the area driving support control is being executed, it is necessary to adjust whether the area driving support control or the driver's operation of the mode selection switch should take priority.

The main purpose of the hybrid vehicle described in this disclosure is to coordinate the operation of the area driving support control and the driving mode selection switch.

The hybrid vehicle of the present disclosure has adopted the following measures to achieve the main objectives described above.

The hybrid vehicle of the present disclosure includes an engine capable of outputting power for driving; a motor capable of outputting power for driving; a power storage device capable of exchanging electric power with the motor; a controller that is programmed to control the engine and the motor by switching between a motor driving mode in which the engine is stopped and the vehicle is driven by the power from the motor, and a normal driving mode in which the vehicle is driven by the power from the engine and the power from the motor as necessary, and to perform an area driving support control that switches to a motor driving mode and performs motor driving when driving in a motor driving area that has been set in advance as an area where the motor should drive; the hybrid vehicle is characterized by: the controller is programmed to stop the area driving support control and to drive in the normal driving mode when the driving mode switch is operated while driving motor driving area in the motor driving mode by the area driving support control.

The hybrid vehicle disclosed in this disclosure is equipped with an engine capable of outputting power for driving, a motor capable of outputting power for driving, a power storage device capable of exchanging electric power with the motor, a controller that controls the engine and the motor by switching between a motor driving mode in which the engine is stopped and the vehicle is driven by the power from the motor, and a normal driving mode in which the vehicle is driven by the power from the engine and the power from the motor as necessary. The controller performs an area driving support control that switches to a motor driving mode and performs motor driving when driving in a motor driving area that has been set in advance as an area where the motor should drive. The controller controls to stop the area driving support control and to drive in the normal driving mode when the driving mode switch is operated while driving the motor driving area in the motor driving mode by the area driving support control. In other words, the driver's intention to operate the driving mode selection switch takes priority over the area driving support control. This allows the area driving support control and the operation of the driving mode selection switch to be coordinated.

In the hybrid vehicle of the present disclosure, the controller may continue to stop the area driving support control until the system is stopped when the area driving support control is stopped and the vehicle is driven in the normal driving mode as a result of the driving mode selection switch being operated while the area driving support control is being executed. In other words, the area driving support control is stopped during the trip, and the area driving support control is executed again for the next trip (after the system is started) . This allows you to coordinate the area driving support control with the operation of the driving mode selection switch.

In the hybrid vehicle of the present disclosure, the hybrid vehicle may include an indicator that displays when the vehicle is driven in the motor driving mode, and the controller may control to stop the area driving support control and to drive in the normal driving mode when the mode selection switch is operated while the vehicle is driven in the motor driving area by the motor driving in the area driving support control and the indicator displays that the vehicle is driven in the motor driving mode. When the vehicle is driven in the motor driving area by the motor driving in the area driving support control and the indicator displays that the vehicle is driven in the motor driving mode, the driver can recognize that the vehicle is running on the motor. The controller controls to stop the area driving support control and to drive in the normal driving mode when the driving mode switch is operated, and the driver's intention to switch from the motor driving mode to the normal driving mode takes priority over the area driving support control. This allows the area driving support control and the operation of the driving mode selection switch to be coordinated.

In the hybrid vehicle of the present disclosure, the hybrid vehicle may include an indicator that displays when the vehicle is driven in the motor driving mode, and the controller may control to continue motor driving in the area driving support control and to display the motor driving mode using the indicator when the mode selection switch is operated while the vehicle is driven in the motor driving area by the motor driving in the area driving support control and the indicator does not display that the vehicle is driven in the motor driving mode. When the vehicle is driven in the motor driving area by the motor driving in the area driving support control and the indicator does not display that the vehicle is driven in the motor driving mode, and the driver operates the driving mode selection switch, it can be determined that the driver operated the driving mode selection switch in order to drive the vehicle in the motor driving mode because the vehicle is not driven in the motor driving mode. Therefore, the motor driving mode is indicated by the indicator to continue motor driving using the area driving support control and to inform the driver that the vehicle is being driven by the motor. This allows the driver's intention to drive in the motor driving mode to be prioritized, and it is possible to coordinate the area driving support control with the operation of the driving mode selection switch.

### Brief Description of Drawings

Figure 1 shows a block diagram of the hybrid vehicle 20 as one embodiment of the present disclosure, with the hybrid ECU 50 shown as a central block;
Figure 2 shows a flowchart of an example of the area driving support control executed by the hybrid ECU 50;
Figure 3 shows an example of the changes in the area driving support control, the driving area, the driving mode, the motor driving indicator 67, and the mode selection switch 36 when the motor driving indicator 67 is lit during motor driving using the area driving support control; and
Figure 4 shows an example of the changes in the area driving support control, the driving area, the driving mode, the motor driving indicator 67, and the mode selection switch 36 when the motor driving indicator 67 is not lit during motor driving using the area driving support control.

### Description of Embodiments

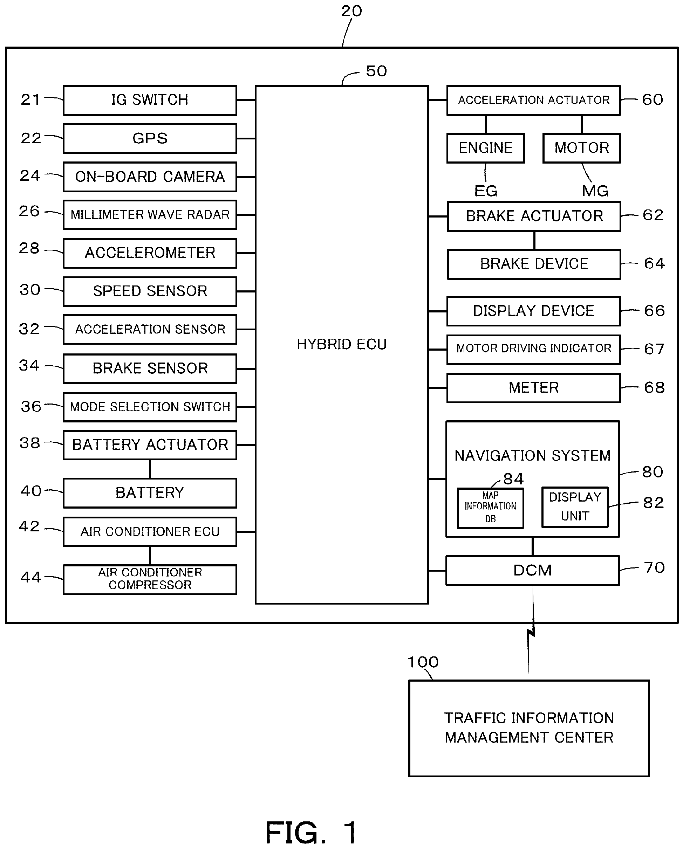

The following is a description of the embodiment of this disclosure. Figure 1 shows a block diagram of the hybrid vehicle 20 as one embodiment of the present disclosure, showing the hybrid electronic control unit 50 (hereinafter referred to as hybrid ECU 50) . as a block at the center. The hybrid vehicle 20 of the embodiment is equipped with the engine EG and the motor MG as a power source, as shown in the figure. The hybrid vehicle 20 of the embodiment has two driving modes: the motor driving mode in which the vehicle is driven by the power from the motor MG with the engine EG operation stopped, and the normal driving mode in which the vehicle is driven by the power from the engine EG and the power from the motor MG, operating the engine EG as necessary.

The hybrid vehicle 20 of the embodiment is equipped with in addition to a power source, the ignition switch 21, GPS (Global Positioning System, Global Positioning Satellite) 22, the on-board camera 24, the millimeter wave radar 26, the accelerometer 28, the speed sensor 30, the acceleration sensor 32, the brake sensor 34, the mode selection switch 36, the battery actuator 38, the battery 40, the electronic control unit for air conditioners (hereinafter referred to as "air conditioner ECU") 42, the air conditioner compressor 44, the hybrid ECU 50, the acceleration actuator 60, the brake actuator 62, the brake device 64, the display device 66, the motor driving indicator 67, the meter 68, the DCM (Data Communication Module) 70, the navigation system 80.

GPS22 is a device that detects the position of the vehicle based on signals transmitted from multiple GPS satellites. The on-board camera 24 is the camera that captures images of the vehicle's surroundings, such as a front camera that captures images of the front of the vehicle and a rear camera that captures images of the rear of the vehicle. The millimeter wave radar 26 detects the distance and relative speed between the vehicle and the vehicle in front of it or between the vehicle and the vehicle behind it.

The accelerometer 28 is, for example, a sensor that detects acceleration in the front-back direction of the vehicle or in the left-right (lateral) direction of the vehicle. The speed sensor 30 detects the vehicle speed of the vehicle based on wheel speed and other factors. The acceleration sensor 32 detects the acceleration opening degree, etc. , according to the amount of the acceleration pedal depressed by the driver. The brake sensor 34 detects the brake position etc. as the amount the driver depresses the brake pedal. The mode selection switch 36 is located near the steering wheel in the driver's seat and is used to switch between the motor driving mode and the normal driving mode. Basically, when the mode selection switch 36 is operated in the motor driving mode, it switches to the normal driving mode, and when the mode selection switch 36 is operated in the normal driving mode, it switches to the motor driving mode.

The battery actuator 38 detects the state of the battery 40, e for example, the voltage between terminals, the charging and discharging currents, and the battery temperature, and manages the battery 40 based on these. The battery actuator 38 calculates the storage ratio SOC as the ratio of the remaining storage capacity to the total storage capacity based on the charge/discharge current. The battery actuator 38 calculates the maximum allowable output power (the output limit Wout) that may be output from the battery 40 and the maximum allowable input power (the input limit Win) that may be input to the battery 40 based on the storage ratio SOC and the battery temperature. The battery 40 is configured as a rechargeable battery that can be charged and discharged, for example, a lithium-ion battery, a nickel-metal hydride battery, or a lead-acid battery.

The air conditioner ECU 42 is configured as a microcomputer centered on a CPU, which is not shown in the figure, and is equipped with ROM, RAM, the flash memory, the input port, the output port, and the communication port, etc. in addition to the CPU. The air conditioner ECU 42 is incorporated in the air conditioning unit that air-conditions the passenger compartment, and drives and controls the air conditioner compressor 44 in the air conditioning unit such that the temperature in the passenger compartment becomes the set temperature.

The engine EG is configured, for example, as an internal combustion engine. The motor MG is configured as the electric motor that also functions as the generator, for example, the synchronous starting electric motor. The motor MG is connected to the battery 40 via an inverter, not shown in the figure, and can output driving power using the power supplied by the battery 40 or charge the battery 40 with the generated power.

The hybrid ECU 50, which is not shown in the figure, is configured as a microcomputer with a CPU at its core, and is equipped with ROM, RAM, the flash memory, the input port, the output port, and the communication port, etc., in addition to the CPU. The hybrid ECU 50 sets the driving mode and also sets the target operating point (the target rotation speed and the target torque) of the engine EG and the torque command of the motor MG based on the set driving mode, the acceleration opening degree from the acceleration sensor 32, the brake position from the brake sensor 34, and the output limit and input limit from the battery actuator 38. The hybrid ECU 50 does not start with accessory on, but with ready on.

The hybrid ECU 50 sets the required driving force and the required power based on the acceleration opening degree from the acceleration sensor 32 and the vehicle speed from the speed sensor 30 when the vehicle is running on the motor. So, the hybrid ECU 50 sets the torque command of the motor MG to output the required driving force and the required power to the vehicle, and transmits the set torque command to the acceleration actuator 60. The hybrid ECU 50 sets the target operating point of the engine EG and the torque command of the motor MG to output the required driving force and the required power to the vehicle when hybrid driving, and transmits the target operating point and the torque command to the acceleration actuator 60. The hybrid ECU 50 also sets the required braking force based on the brake position from the brake sensor 34 and the vehicle speed from the speed sensor 30 when the brake pedal is depressed. The hybrid ECU 50 also sets the torque command for regenerative control of the motor MG based on the required braking force and the vehicle speed, and also sets the target braking force by the brake device. The hybrid ECU 50 then transmits the torque command to the acceleration actuator 60 and the target braking force to the brake actuator 62.

The acceleration actuator 60 drives and controls the engine EG and the motor MG according to the target operating point and the torque command set by the hybrid ECU 50. The acceleration actuator 60 performs the intake air volume control, the fuel injection control, the ignition control, and the intake valve open/close timing control such that the engine EG is operated at the target operating point (the target rotation speed and the target torque) . The acceleration actuator 60 also controls the switching of the switching elements of the inverter to drive the motor MG such that the torque corresponding to the torque command is output from the motor MG.

The brake actuator 62 controls the brake device 64 such that the target braking force set by the hybrid ECU 50 is applied to the vehicle by the brake device 64. The brake device 64 is configured as the hydraulically driven friction brake, for example.

The display device 66 is built into the installation panel in front of the driver's seat, for example, and displays various information and also functions as a touch panel. The motor driving indicator 67, which is not shown, is built into the installation panel in front of the driver's seat, and lights up when the motor is running and goes out when the motor is not running.

The DCM (Data Communication Module) 70 transmits the vehicle information to the traffic information management center 100 and receives the road traffic information from the traffic information management center 100. The vehicle information can include, for example, the vehicle's position, the vehicle's speed, the driving power, the driving mode, and so on. The road traffic information can include, for example, the information on current and future traffic congestion, the information on the current average vehicle speed and predicted future average vehicle speed in the section on the travel route, the information on traffic regulations, the information on weather, the information on road surface conditions, and the information on maps. The DCM 70 communicates with the traffic information management center 100 at predetermined intervals (e.g., every 30 seconds, 1 minute, 2 minutes, etc.).

The navigation system 80 is the system that guides the vehicle to the set target destination, and is equipped with the display unit 82 and the map information database 84. The display unit 82 is a functional block that has the function of displaying the route to the target destination, the vehicle's position, and other information on the display device 66 based on map information. The navigation system 80 communicates with the traffic information management center 100 via the DCM 70. The navigation system 80 sets the route based on the information of the target destination or the transit destination, the information of the current location (the current position of the own vehicle) obtained by the GPS 22, and the information stored in the map information database 84, when the target destination or the transit destination is set. The navigation system 80 communicates with the traffic information management center 100 at predetermined intervals (e.g., every 3 or 5 minutes) to obtain the road traffic information, and provides the route guidance based on the road traffic information. The map information stored in the map information database 84 includes not only data as the map, but also the road grade, the road type, and the elevation for each driving segment.

The navigation system 80, when providing the route guidance, generates the forward-reading information such as the load information necessary for traveling each travel segment every time it acquires the road traffic information from the traffic information management center 100 (or every predetermined time) based on the information on each travel segment in the travel route in the road traffic information acquired from the traffic information management center 100, the information on the driving load, the vehicle speed of the own vehicle, the driving power of the own vehicle, the driving mode of the own vehicle, etc., and transmits the information to the hybrid ECU 50. The forward-reading information includes the information about the vehicle, such as the current position, the vehicle speed, the driving power, the driving mode, and so on, the information about current and future traffic jams, the information about the current average vehicle speed and predicted average vehicle speed in the future along the travel route, the information about the traffic restrictions, the information on weather conditions, the information about the road surface condition, the information about maps. The information on the map includes areas that should be driven by the motor (the motor driving area), which are defined by the municipality and other factors. The navigation system 80 can also set the motor driving area by specifying an area, such as an area near the home, through user operation. The navigation system 80 sends a signal to the hybrid ECU 50 to determine whether or not the vehicle is in the motor driving area when driving.

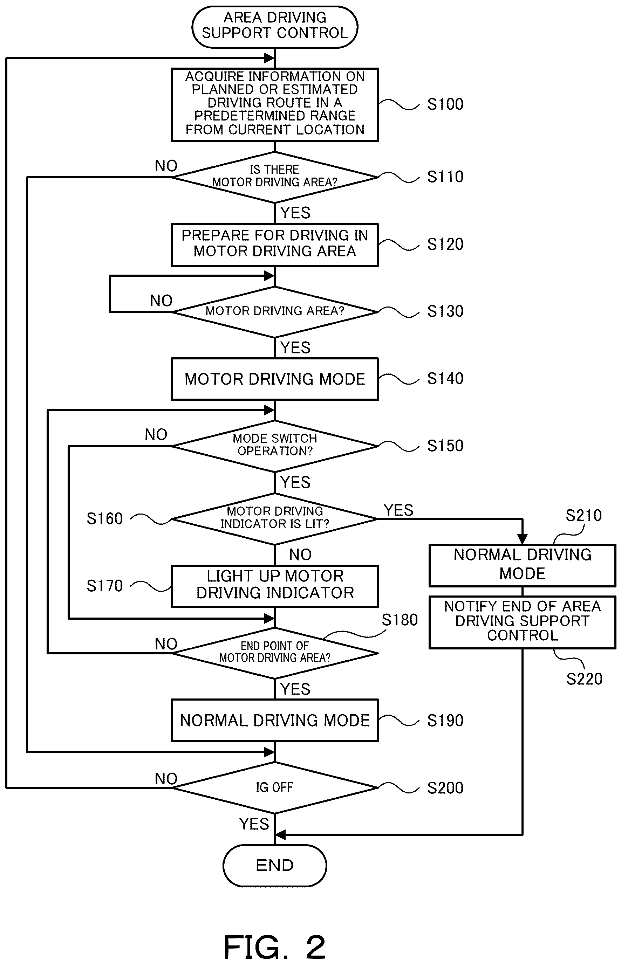

The next section describes the operation of the hybrid vehicle 20 configured in this way, particularly the operation when driving in the motor driving area. Figure 2 shows a flowchart of an example of the area driving support control executed by the hybrid ECU 50. The area driving support control is executed from when the ignition switch 21 is turned on and the system is started until the end process is performed.

When the area driving support control is executed, the hybrid ECU 50 first acquires information on the planned or estimated driving route in a predetermined range from the current location (step S100). The predetermined range can be 5 km, 10 km, 15 km, etc. The planned driving route is the driving route planned by the navigation system 80 as route guidance from the current location to the destination by setting the destination, and the estimated driving route is the driving route that is estimated to be traveled from the current location. The information to be acquired includes, in addition to the forward-reading information described above, the existence of a motor driving area, and if a motor driving area exists, the start and end points of the motor driving area.

Next, it determines whether or not there is the motor driving area in the planned or estimated driving route in the predetermined range (step S110) . If it is determined that there is no motor driving area, it is determined whether the ignition switch 21 has been turned off or not (step S200). If it is determined that the ignition switch 21 has not been turned off (it is in the on state), it returns to the process of acquiring information on the planned or estimated driving route within a predetermined range from the current location in step S100.

If it is determined in step S110 that there is a motor driving area in the planned or estimated driving route within the specified range, the hybrid ECU 50 prepares for driving in the motor driving area (step S120) . The preparation for driving in the motor driving area includes the preparation to increase the state of charge (SOC) of the battery 40 to a high level from a point that is a specified distance (e.g. 1 km or 2 km) before the starting point of the motor driving area such that driving in the motor driving area becomes possible.

Next, the hybrid ECU 50 waits for the start of the motor driving area (step S130), switches to motor driving mode, and drives by motor driving (step S140) . Then, it judges whether or not there has been an operation of the mode selection switch 36 (step S150). If it is determined that there has been no operation of the mode selection switch 36, it is determined whether or not the end point of the motor driving area has been reached (step S180), and if it is determined that the end point of the motor driving area has not yet been reached, it returns to the process of determining whether or not there has been an operation of the mode selection switch 36 in step S150. If the mode selection switch 36 is not operated while driving in the motor driving area, then motor driving continues in the motor driving mode until the end of the motor driving area is reached. When it is reflected that the end point of the motor driving area has been reached in step S180, the driving mode is switched to the normal driving mode (step S190), and it is judged whether the ignition switch 21 has been turned off or not (step S200) . If it is determined that the ignition switch 21 has not been turned off (it is still on), the process returns to the step S100, where information is obtained on the planned or estimated driving route within a specified range from the current location. On the other hand, when it is determined that the ignition switch 21 is turned off, the area driving support control is finished.

If the mode selection switch 36 is operated while driving in the motor driving area, the hybrid ECU 50 makes a positive determination at step S150 and determine whether or not the motor driving indicator 67 is lit (step S160) . In the embodiment of the hybrid vehicle, if the user wants to be able to recognize the driving mode when the vehicle switches from the normal driving mode to the motor driving mode automatically using the area driving support control, the setting is to turn on the motor driving indicator 67 when the vehicle is being driven by the motor while the area driving support control is being executed. On the other hand, if the user does not want the driving mode to be recognized when the system automatically switches from the normal driving mode to the motor driving mode using the area driving support control, it is possible to set the system such that the motor driving indicator 67 lights up when the vehicle is being driven by the motor while the area driving support control is being executed. In the former case, the motor driving indicator 67 is lit when the vehicle is in the motor driving mode due to the area driving support control, and in the latter case, the motor driving indicator 67 is not lit even if the vehicle is in the motor driving mode due to the area driving support control.

If it is determined in step S160 that the motor driving indicator 67 is not lit, the motor driving indicator 67 is lit (step S170), and it is determined whether or not the end point of the motor driving area has been reached while continuing motor driving (step S180) . Then, if it is determined that the end of the motor driving area has not yet been reached, the process returns to the step of determining whether or not the mode selection switch 36 has been operated.

When it is determined in step S160 that the motor driving indicator 67 is lit, the system switches from the motor driving mode to the normal driving mode (step S210), notifies the driver that the area driving support control has ended (step S220), and then finishes this process. In this way, the operation of the mode selection switch 36 while the motor driving indicator 67 is lit in the area driving support control is judged to be the driver's intention to switch from the motor driving mode to the normal driving mode, and even in the motor driving area, driving is executed in the normal driving mode, and at the same time, the area driving support control is terminated. This allows the driving mode to be prioritized according to the driver's intentions. In addition, the determination that the motor driving indicator 67 is lit in step S160 is made when the mode selection switch 36 is operated for the first time in the motor driving area when the setting is to light the motor driving indicator 67 when the motor is driving during execution of the area driving support control. This determination is also made when the mode selection switch 36 is operated for the second time in the motor driving area when the motor driving indicator 67 is not set to light up when the motor is running during the execution of the area driving support control.

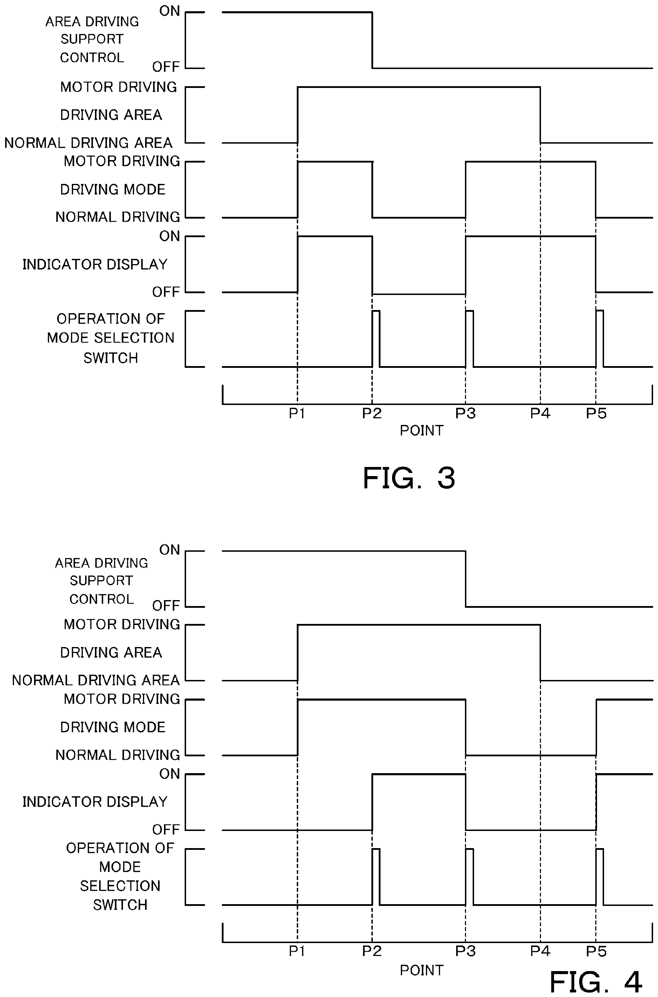

Figure 3 shows an example of the changes in the area driving support control, the driving area, the driving mode, the motor driving indicator 67, and the mode selection switch 36 when the motor driving indicator 67 is lit during motor driving using the area driving support control. Figure 4 shows an example of the changes in the area driving support control, the driving area, the driving mode, the motor driving indicator 67, and the mode selection switch 36 when the motor driving indicator 67 is not lit during motor driving using the area driving support control. In the diagram, the point P1 is the starting point of the motor driving area, and the point P4 is the end of the motor driving area. The points P2 and P3 are the points where the driver operated the mode selection switch 36 while in the motor driving area, and the point P5 is the point where the driver operated the mode selection switch 36 after exiting the motor driving area. When the motor driving indicator 67 is lit during motor driving using the area driving support control, as shown in Figure 3, the mode is switched from the motor driving mode to the normal driving mode at the point P2 where the mode selection switch 36 is first operated after reaching the motor driving area, and the area driving support control ends. After that, each time the driver operates the mode selection switch 36 (at the points P3 and P5), the system switches from the normal driving mode to the motor driving mode or from the motor driving mode to the normal driving mode. On the other hand, when the motor driving indicator 67 is not lit during motor driving using the area driving support control, as shown in Figure 4, when the mode selection switch 36 is operated for the first time after reaching the motor driving area at the point P2, the motor driving indicator 67 is not lit, so the motor driving indicator 67 is lit and the motor driving mode is continued. At the point P3 where the driver operates the mode selection switch 36 for the second time, the motor driving indicator 67 is lit, so the system switches from the motor driving mode to the normal driving mode and the area driving support control is terminated. After that, each time the driver operates the mode selection switch 36 (the point P5), the vehicle switches from the normal driving mode to the motor driving mode or from the motor driving mode to the normal driving mode.

In the hybrid vehicle 20 of the embodiment described above, when the driver operates the mode selection switch 36 while the motor is driving in the motor driving area, the area driving support control is terminated and the vehicle drives in the normal driving mode. This allows the driver's intention to override the area driving support control by operating the mode selection switch 36, and as a result, it is possible to coordinate the area driving support control with the operation of the mode selection switch 36 by the driver.

In the hybrid vehicle 20 of the embodiment, when the driver operates the mode selection switch 36 while driving the motor driving area by the area driving support control with the motor driving indicator 67 lit, the area driving support control is terminated and the vehicle is driven in the normal driving mode. On the other hand, if the driver operates the mode selection switch 36 while the motor is driving in the motor driving area without the motor driving indicator 67 being lit (in the off state) due to the area driving support control, the motor driving indicator 67 is lit and motor driving by the area driving support control continues. This also allows for the case where the driver operates the mode selection switch 36 to switch to the motor driving mode because they think they are driving in the normal driving mode, even though the motor driving indicator 67 is off, because the motor is driving in the area driving support control.

On the hybrid vehicle 20 in the embodiment, the user can set whether or not to turn on the motor driving indicator 67 while driving with the motor using the area driving support control. However, it is also possible to make it such that the user cannot make such settings.

On the hybrid vehicle 20 in the embodiment, when the driver operates the mode selection switch 36 while the motor is driving in the motor driving area, the area driving support control is ended by the area driving support control. However, it is also possible not to notify the end of the area driving support control.

The following is a description of the correspondence between the main elements of the embodiment and the main elements of the disclosure described in Summary. In the embodiment, the engine EG corresponds to " the engine ", the motor MG corresponds to " the motor ", the battery 40 corresponds to the " the power storage device ", and the hybrid electronic control unit 50 corresponds to " the controller ".

The correspondence between the major elements of the embodiment and the major elements of the disclosure described in Summary is an example of how the embodiment can be used to specifically explain the embodiment of the disclosure described in Summary. This does not limit the elements of the disclosure described in Summary. In other words, interpretation of the disclosure described in Summary should be based on the description in that section, and the embodiment is only one specific example of the disclosure described in Summary.

The above is a description of the form for implementing this disclosure using the embodiment. However, the present disclosure is not limited in any way to these embodiments, and can of course be implemented in various forms within the scope that does not depart from the gist of the present disclosure.

### Industrial Applicability

This disclosure can be used in the hybrid vehicle manufacturing industry, for example.

## Claims

1. A hybrid vehicle (20) comprising:
an engine (EG) capable of outputting power for driving;
a motor (MG) capable of outputting power for driving:
a power storage device (40) capable of exchanging electric power with the motor (MG);
a controller (50) that is programmed to control the engine (EG) and the motor (MG) by switching between a motor driving mode in which the engine (EG) is stopped and the vehicle is driven by the power from the motor (MG), and a normal driving mode in which the vehicle is driven by the power from the engine (EG) and the power from the motor (MG) as necessary, and to perform an area driving support control that switches to a motor driving mode and performs motor driving when driving in a motor driving area that has been set in advance as an area where the motor should drive;
the hybrid vehicle (20) is **characterized by**:
the controller (50) is programmed to stop the area driving support control and to drive in the normal driving mode when a driving mode selection switch (36) is operated while driving motor driving area in the motor driving mode by the area driving support control.

2. The hybrid vehicle (20) according to claim 1,
wherein the controller (50) is programmed to continue to stop the area driving support control until the system is stopped when the area driving support control is stopped and the vehicle is driven in the normal driving mode as a result of the driving mode selection switch (36) being operated while the area driving support control is being executed.

3. The hybrid vehicle (20) according to claim 1,
wherein the hybrid vehicle (20) includes an indicator (67) that displays when the vehicle is driven in the motor driving mode, and
the controller (50) is programmed to stop the area driving support control and to drive in the normal driving mode when the driving mode selection switch (36) is operated while the vehicle is driven in the motor driving area by the motor driving in the area driving support control and the indicator (67) displays that the vehicle is driven in the motor driving mode.

4. The hybrid vehicle (20) according to claim 1,
wherein the hybrid vehicle (20) includes the indicator(67) that displays when the vehicle is driven in the motor driving mode, and
the controller (50) is programmed to continue motor driving in the area driving support control and to display the motor driving mode using the indicator (67) when the driving mode selection switch (36) is operated while the vehicle is driven in the motor driving area by the motor driving in the area driving support control and the indicator (67) does not display that the vehicle is driven in the motor driving mode.
